**Europäisches Patentamt**

**European Patent Office**

**Office européen des brevets**

(19)

(11) Veröffentlichungsnummer : **0 148 344**
**B1**

(12) # EUROPÄISCHE PATENTSCHRIFT

(45) Veröffentlichungstag der Patentschrift :
21.10.87

(51) Int. Cl.⁴ : **C 08 G 18/58**, C 08 G 18/00,
**C 08 G 18/48**

(21) Anmeldenummer : **84113000.8**

(22) Anmeldetag : **29.10.84**

(54) **Verwendung von zu Polyurethanenkunststoffen ausreagierenden Reaktionsgemischen als Gießmassen.**

(30) Priorität : **10.11.83 DE 3340588**

(43) Veröffentlichungstag der Anmeldung :
**17.07.85 Patentblatt 85/29**

(45) Bekanntmachung des Hinweises auf die Patenterteilung : **21.10.87 Patentblatt 87/43**

(84) Benannte Vertragsstaaten :
**AT BE CH DE FR GB IT LI**

(56) Entgegenhaltungen :
**DE-A- 1 669 596**
**DE-A- 2 149 613**
**DE-A- 2 331 796**
**DE-A- 2 442 434**
**DE-B- 2 513 378**
**US-A- 3 148 167**
**US-A- 3 849 349**

(73) Patentinhaber : **BAYER AG**
**Konzernverwaltung RP Patentabteilung**
**D-5090 Leverkusen 1 Bayerwerk (DE)**

(72) Erfinder : **Heine, Heinrich, Dipl.-Ing.**
**Müritzstrasse 38**
**D-5090 Leverkusen 1 (DE)**

## Beschreibung

Die Erfindung betrifft die Verwendung von zu Polyurethanen mit einem verbesserten Wärmealterungsverhalten ausreagierenden Reaktionsgemischen, die im wesentlichen aus organischen Polyisocyanaten, organischen Polyetherpolyolen und Epoxidverbindungen bestehen als Gießmassen.

Durch Umsetzung von organischen Polyisocyanaten mit organischen Polyhydroxylverbindungen hergestellte Polyurethan-Kunststoffe haben sich auf vielen Einsatzgebieten einen festen Platz erobert. Bei manchen dieser Einsatzgebiete wie z. B. als Gießharz oder im Formenbau in der Elektrotechnik, auf dem Klebstoffgebiet oder als Lack- bzw. Beschichtungsmaterialien, kann nicht ausgeschlossen werden, daß die Polyurethane für längere Zeit höheren Temperaturen ausgesetzt werden. Die Dauerwärmebeständigkeit der Polyurethane stellt daher eine anwendungstechnisch wichtige Eigenschaft dar. Gießharze bzw. Vergußmassen auf Polyurethanbasis können im allgemeinen nicht während eines längeren Zeitraums auf Temperaturen von oberhalb 120 °C gehalten werden, da andernfalls die Formbeständigkeit der Kunststoffe nicht mehr gewährleistet ist (Blasenbildung) und die mechanischen Eigenschaften negativ beeinträchtigt werden.

Es war daher die der Erfindung zugrunde liegende Aufgabe, neue Gießmassen zur Verfügung zu stellen, welche die Herstellung von Polyurethan-Kunststoffen eines verbesserten Wärmealterungsverhaltens nach der Gießharztechnologie gestatten.

Die Aufgabe konnte überraschenderweise durch die erfindungsgemäße Verwendung von zu Polyurethan ausreagierenden Reaktionsgemischen aus organischen Polyisocyanaten, organischen Polyetherpolyolen und einer bestimmten Menge an Epoxidverbindungen gelöst werden.

Es war zwar bekannt, daß organische Polyisocyanate mit Epoxidverbindungen bei höhen Temperaturen wie z. B. 180-250 °C unter Bildung von Oxazolidonen einer hohen Dauerwärmebeständigkeit umgesetzt werden können (vgl. z. B. G.P. Speranza und W.J. Peppel, J. org. Chem. 23 (1958), Seiten 1922 ff.), jedoch kann der erfindungsgemäß aufgefundene überraschende Effekt der Mitverwendung von Epoxidverbindungen nicht mit der Bildung von Oxazolidonen bei der Herstellung der Polyurethane erklärt werden, da die nachstehend näher beschriebene erfindungsgemäße Verwendung bei niedrigen Temperaturen durchgeführt wird, bei denen die Bildung von Oxazolidonen ausgeschlossen werden kann. Im übrigen wäre auch die gleichzeitige Bildung von Oxazolidonen neben den Polyurethanen keine plausible Erklärung für die erhöhte Hitzeresistenz der Polyurethane.

Aus der DE-A-1 669 596 war es ferner bekannt, Formkörper einer hohen Formbeständigkeit in der Wärme und guter Farbstabilität dadurch herzustellen, daß man polyurethanbildende Reaktionskomponenten enthaltende Massen, die 10-50 % an niedermolekularen, mehrwertigen Alkoholen und 0,1 bis 10 Gew.-% eines ungehärteten Epoxyharzes enthalten, verformt und aushärtet. Die Umsetzung der Reaktionsgemische dieser Vorveröffentlichung erfolgt vorzugsweise bei erhöhten Temperaturen und dient insbesondere der Herstellung von armierten Formkörpern einer erhöhten Wärmeformbeständigkeit. Im Unterschied hierzu werden erfindungsgemäß Gießmassen verwendet, die keine niedermolekularen Polyole enthalten, und die die bereits bei 10-60 °C nach den Methoden der Gießharztechnologie zu Polyurethankunststoffen eines verbesserten Wärmealterungsverhaltens verarbeitet werden können.

Gegenstand der Erfindung ist die

Verwendung von Reaktionsgemischen bestehend aus

a) organischen Polyisocyanaten

b) Polyetherpolyolen mit mindestens zwei alkoholischen Hydroxylgruppen des Molekulargewichtsbereichs 400-6 000,

c) mindestens einer Epoxidverbindung mit einem Gehalt an Hydroxylgruppen von maximal 2,5 Gew.-% und einem Epoxid-Äquivalentgewicht von 100-300

und gegebenenfalls

d) an sich bekannten Hilfs- und Zusatzmitteln

unter Einhaltung eines Äquivalentverhältnisses von Isocyanatgruppen zu Hydroxylgruppen von 0,7 : 1 bis 1,3 : 1 und eines Äquivalentverhältnisses von Epoxidgruppen zu Isocyanatgruppen von 0,1 : 1 bis 1 : 1 als bei 10-60 °C zu Polyurethankunststoffen mit verbessertem Wärmealterungsverhalten ausreagierende Gießmassen.

Für die erfindungsgemäße Verwendung geeignete Polyisocyanate sind alle beliebigen, üblicherweise in der Polyurethanchemie eingesetzten, mindestens zwei Isocyanatgruppen aufweisende organische Verbindungen. Gut geeignet sind beispielsweise 4,4'-Diisocyanatodiphenylmethan bzw. technische Gemische mit 2,4'- und gegebenenfalls 2,2'-Diisocyanatodiphenylmethan, Polyisocyanatgemische der Diphenylmethanreihe, wie sie durch Phosgenierung von Anilin/Formaldehyd-Kondensaten in an sich bekannter Weise gewonnen werden, und die neben den genannten Diisocyanaten wechselnde Mengen an höheren Homologen enthalten, 2,4-Diisocyanatotoluol und seine technischen Gemische mit bis zu 35 Gew.-%, bezogen auf Gesamtgemisch an 2,6-Diisocyanatotoluol, Hexamethylendiisocyanat, 1-Isocyanato-3,3,5-trimethyl-5-isocyanatomethylcyclohexan (Isophorondiisocyanat), Urethan-, Carbodiimid-, Isocyanurat-, Allophanat- oder Biuret-modifizierte Polyisocyanate auf Basis der genannten unmodifizierten Polyisocyanate oder beliebige Gemische der genannten Polyisocyanate. Besonders bevorzugt werden die genannten Phosgenierungsprodukte von Anilin/Formaldehyd-Kondensaten als Polyisocyanatkomponente bei der Durchführung des erfindungsgemäßen Verfahrens eingesetzt.

Für die erfindungsgemäße Verwendung geeignete Polyetherpolyole sind solche mit mindestens zwei, vorzugsweise zwei bis drei alkoholisch gebundenen Hydroxylgruppen des Molekulargewichtsbereichs 400-6 000, vorzugsweise 1 000-4 000.

Geeignete Polyetherpolyole sind die an sich bekannten Alkoxylierungsprodukte geeigneter Startermoleküle wie z. B. Wasser, Ethylenglykol, Propylenglykol, Trimethylolpropan, Glycerin, Sorbit, Sucrose oder beliebige Gemische derartiger Startermoleküle unter Verwendung von Ethylenoxid und/oder Propylenoxid als Alkoxylierungsmittel.

Für die erfindungsgemäße Verwendung geeignete Epoxide sind alle beliebigen organischen Verbindungen, die mindestens eine Epoxidgruppe aufweisen, und die praktisch hydroxylgruppenfrei sind, d. h. einen Gehalt an Hydroxylgruppen von maximal 2,5 Gew.-%, vorzugsweise von maximal 1 Gew.-% aufweisen. Besonders bevorzugt kommen aus der Epoxidchemie an sich bekannte Glycidylester oder - ether in Betracht. Diese Verbindungen können entweder eine oder auch mehrere Epoxidgruppen pro Molekül aufweisen. Ihr Epoxidäquivalentgewicht liegt innerhalb des Bereichs von 100 bis 300. Typische Beispiele derartiger Epoxidverbindungen sind Phenyl- und Kresyl-glycidyl-ether mit einem Epoxidäquivalentgewicht von 140 bis 160, Butyl-glycidyl-ether mit einem Epoxidäquivalentgewicht von 154 bis 172, Polyepoxidverbindungen wie Diglycidyl-ether des Bisphenol A mit einem Epoxidäquivalentgewicht von 170 bis 300, o-Phthalsäurediglycidyl-ester mit einem Epoxidäquivalentgewicht von unter 200, m- und p-Phthalsäure-diglycidyl-ester, Hexahydrophthalsäurediglycidylester und Tetrahydrophthalsäurediglycidylester des obengenannten Epoxidäquivalentgewichtsbereichs von 100 bis 300. Weitere geeignete Epoxidverbindungen sind beispielsweise die in DE-OS-2 438 205, Seiten 4-6 beispielhaft erwähnten, Epoxidgruppen aufweisenden Verbindungen, soweit sie den obengenannten Bedingungen bezüglich des Hydroxylgruppengehalts und des Epoxidäquivalentgewichts entsprechen.

Neben den beispielhaft genannten, erfindungswesentlichen Ausgangsmaterialien können bei der erfindungsgemäßen Verwendung beliebige Hilfs- und Zusatzmittel mitverwendet werden. Hierzu gehören beispielsweise Farbstoffe, Weichmacher, Füllstoffe wie z. B. Quarzmehl, Aluminiumhydroxid oder Kreide, Verstärkungsmaterialien wie Glasfasern ; Katalysatoren wie z. B. tert. Amine wie Triethylendiamin oder Dimethylbenzylamin oder auf metallorganischer Basis wie z. B. Zinn-(II)-octoat oder Dibutylzinn-dilaurat ; wasseradsorbierende Zusatzmittel wie z. B. Zeolithe ; Flammschutzmittel wie z. B. die in der Polyurethanchemie für diesen Zweck eingesetzten phosphororganischen Verbindungen ; Treibmittel wie z. B. Wasser oder Halogenkohlenwasserstoffe wie z. B. Trifluor-chlor-methan oder Difluor-dichlor-methan ; Schaumstabilisatoren auf Siliconbasis oder Verlaufshilfsmittel der aus Lacktechnologie bekannten Art.

In den erfindungsgemäß zu verwendenden Gießmassen liegen die Polyisocyanate a) und die Polyetherpolyole b) in solchen Mengen vor, die einem Äquivalentverhältnis zwischen Isocyanatgruppen und Hydroxylgruppen von 0,7 : 1 bis 1,3 : 1, vorzugsweise 1 : 1 bis 1,25 : 1 entsprechen. Besonders bervorzugt wird unter Verwendung äquivalenter, bzw. leicht überschüssiger Mengen an Polyisocyanaten, bezogen auf die Polyhydroxylverbindungen, gearbeitet. Erfindungswesentlich ist nun, daß dem Reaktionsgemisch oder vor Durchmischen der beiden Hauptkomponenten zumindest einer der Einzelkomponenten mindestens eine Epoxidverbindung der beispielhaft genannten Art einverleibt wird. Die Epoxidverbindung bzw. die Epoxidverbindungen werden im allgemeinen in einer solchen Menge eingesetzt, daß auf jede Isocyanatgruppe der Polyisocyanatkomponente 0,1 bis 1, vorzugsweise 0,1 bis 0,75 Epoxidgruppen entfallen.

Die gegebenenfalls mitzuverwendenden Hilfs- und Zusatzmittel werden im allgemeinen der Polyolkomponente zugemischt, obwohl grundsätzlich auch ihre Durchmischung mit der Polyisocyanatkomponente in Betracht kommen kann.

Die Durchmischung der Reaktionspartner und der Hilfs- und Zusatzmittel kann nach allen üblichen Methoden des Standes der Technik erfolgen. Die erfindungsgemäß zu verwendenden Gießmassen reagieren innerhalb des Temperaturbereichs von 10-60 °C zu Polyurethankunststoffen, d. h. insbesondere Polyurethanformteilen eines verbesserten Wärmealterungsverhaltens aus.

In den nachfolgenden Beispielen beziehen sich alle Prozentangaben auf Gewichtsprozente und alle Angaben in « Teilen » auf Gewichtsteile.

## Beispiel 1

100 Teile eines Polyetherpolyols aus Trimethylolpropan und Propylenoxid mit einer Viskosität von 600 ± 100 mPa.s bei 25 °C und einem OH-Gehalt von ca. 11,3 % werden mit 10 Teilen einer Paste aus 50 % eines Zeolith-Pulvers und 50 % Rizinusöl und mit 40 Teilen eines flüssigen Epoxidharzes aus Bisphenol A und Epichlorhydrin mit einer Viskosität von ca. 10 000 mPa.s bei 25 °C, einem Epoxidäquivalentgewicht von 195 und einem OH-Gehalt von 0,2 % gemischt. Diese Masse wird im Vakuum von ca. 0,5 mbar unter Rühren entgast. Anschließend werden 100 Teile eines rohen Polyisocyanatgemisches der Diphenylmethanreihe mit einer Viskosität ca. 125 mPa.s/25 °C und einem Isocyanatgehalt von ca. 31 % (Äquivalentverhältnis Epoxidgruppen : Isocyanatgruppen = 0,28 : 1) zugefügt und gründlich untergemischt. Diese Gießharzmasse wird in eine mit Trennmittel präparierte Form erfüllt, worin sie innerhalb von 24 Stunden bei Raumtemperatur aushärtet. (NCO/OH-Äquivalentverhältnis : ca. 1,1 : 1).

Der ausgehärtete harte Formstoff wird in Normstäbe der Größe 150 × 10 × 15 mm geschnitten. Diese Stäbe werden in einem Trockenofen bei 180 °C gelagert. Nach 30 und 48 Tagen werden die Prüfstäbe herausgenommen und begutachtet. Es zeigt sich, daß die Formstoffe durch die Wärmealterung zwar an der Oberfläche dunkler gefärbt sind als das Ausgangsmaterial, daß die Form aber nach 30 Tagen noch vollständig erhalten ist und daß nach 48 Tagen Lagerung bei 180 °C nur leichte Deformationen festgestellt werden können. Beim Durchschneiden der Prüfkörper ist der Gießharzformstoff noch kompakt ohne jede Gaseinschlüsse.

### Vergleichsbeispiel

Aus den gleichen Komponenten wie in Beispiel 1 beschrieben, werden in gleicher Weise ohne Zusatz von Epoxidharz Normstäbe hergestellt. Bei der Lagerung ebenfalls bei 180 °C im Trockenofen, sind die Prüfkörper nach 30 Tagen bereits deutlich deformiert, beim Aufschneiden der Gießlinge sind einige Gasblaseneinschlüsse zu erkennen. Nach 48 tägiger Lagerung haben sich die ursprünglich rechteckigen Stäbe in Rundstäbe verwandelt, beim Aufschneiden ist eine deutliche Schaumstruktur zu erkennen.

### Beispiel 2

Aus den in Beispiel 1 genannten Ausgangsmaterialien und Zusatzmitteln, jedoch unter Zugabe von 0,2 Teilen Dimethylbenzylamin als Beschleuniger für die Polyurethanbildungsreaktion werden Prüfkörper für eine Wärmelagerung hergestellt. Die Topfzeit des Gemisches beträgt 12 Min. im Vergleich zu 60 Min. des nicht katalysierten Gemisches. Für die Härtung der Gießharzmasse werden 8 Stunden bei Raumtemperatur benötigt.

Bei der anschließenden Wärmealterung der Prüfkörper erhält man nach 30 bzw. 48 Tagen Lagerung bei 180 °C nur eine Dunkelfärbung der Normstäbe, eine Deformierung oder Gasblasenbildung im Inneren der Prüflinge ist nicht festzustellen.

### Beispiel 3

500 Teile eines Polyetherpolyols auf Basis Trimethylolpropan und Propylenoxid mit einer Viskosität von ca. 800 mPa.s bei 25 °C und einem OH-Gehalt von ca. 1,05 % werden mit 50 Teilen einer Paste aus 50 % Zeolith-Pulver und 50 % Rizinusöl, 2,5 Teilen Dimethylbenzylamin und 625 Teilen eines feingemahlenen Aluminiumhydroxid-Pulvers vermischt. Anschließend wird der Ansatz in 5 gleiche Teilmengen aufgeteilt. Der ersten Teilmenge werden 2,5, der nächsten 5,0, der dritten 7,5, der vierten 10,0 Teile des flüssigen Epoxidharzes gemäß Beispiel 1 zugemischt. Die fünfte Teilmenge wird ohne Epoxidharzzusatz weiterverarbeitet.

Die Massen werden anschließend jeweils im Vakuum bei 0,5 mbar unter Rühren entgast und anschließend mit jeweils 12,7 Teilen des Polyisocyanats gemäß Beispiel 1 gründlich abgemischt. Das NCO/OH-Äquivalentverhältnis liegt hierbei jeweils bei ca 1,2 : 1. Das Äquivalentverhältnis von Epoxid- zu Isocyanatgruppen liegt bei 0,14 : 1, 0,28 : 1, 0,41 : 1, 0,55 : 1 bzw. 0 : 1 (Vergleich).

Die so hergestellten Harzmassen haben bei Raumtemperatur eine Topfzeit von ca. 15 min.

Zur Herstellung von Prüfkörpern werden die Massen in Blechdeckel von 100 m Ø und einer Höhe von 6 mm gegossen. Nach 10 stündiger Lagerung bei Raumtemperatur können elastische Prüfkörper entformt werden. Zunächst wird die Shore-Härte A bei Raumtemperatur bestimmt, anschließend werden die Prüflinge bei 130 °C in einem Heizofen einer Wärmealterung unterworfen. Zur Bestimmung des Alterungsverhaltens werden die Prüfkörper in regelmäßigen Abständen dem Ofen entnommen, auf Raumtemperatur abgekühlt und die Shore-Härte A erneut gemessen. Die Ergebnisse sind in der folgenden Tabelle aufgeführt :

| | | | | | Weiche Polyurethanharzmischung mit | | | | |
|---|---|---|---|---|---|---|---|---|---|
| | | | | | 0 | 2,5 | 5,0 | 7,5 | 10,0 Teilen Epoxidharz |
| 0-Werte | | | | | 74 | 76 | 78 | 78 | 75 |
| nach | 2 | Tagen | bei | 130°C | 73 | 75 | 73 | 73 | 70 |
| " | 5 | " | " | 130°C | 59 | 71 | 71 | 70 | 69 |
| " | 7 | " | " | 130°C | 47* | 69 | 70 | 70 | 69 |
| " | 9 | " | " | 130°C | 35* | 67 | 68 | 70 | 69 |
| " | 12 | " | " | 130°C | 14* | 64 | 67 | 67 | 67 |

* Prüfkörper ist an der Oberfläche klebrig.

Wie zu erkennen ist, verliert der Prüfkörper ohne Epoxidharzzusatz wesentlich schneller seine Härte und Festigkeit als die Prüfkörper mit Epoxidharzzusatz.

Beispiel 4

Beispiel 3 wird wiederholt mit dem einzigen Unterschied, daß anstelle des Epoxidharzes auf Basis von Bisphenol A ein Epoxidharz aus Hexahydrophthalsäure und Epichlorhydrin der Viskosität 750 mPa.s/25 °C, des Epoxidäquivalentgewichts 175 und mit einem OH-Gehalt von < 1 % verwendet wird. Die Ergebnisse des Alterungstest (Meßwerte der Shore-Härte A) sind der nachstehenden Tabelle zusammengestellt :

| | 0 | 2,5 | 5,0 | 7,5 | 10,0 Teilen Epoxidharz |
| --- | --- | --- | --- | --- | --- |
| 0-Wert | 74 | 74 | 78 | 79 | 79 |
| nach 2 Tagen bei 130°C | 73 | 75 | 73 | 73 | 74 |
| " 5 " " 130°C | 59 | 72 | 72 | 72 | 72 |
| " 7 " " 130°C | 47* | 70 | 71 | 70 | 70 |
| " 9 " " 130°C | 35* | 69 | 70 | 70 | 70 |
| " 10 " " 130°C | 14* | 65 | 67 | 68 | 68 |

* Oberfläche der Prüfkörper ist klebrig.

**Patentansprüche**

1. Verwendung von Reaktionsgemischen bestehend aus
a) organischen Polyisocyanaten
b) Polyetherpolyolen mit mindestens zwei alkoholischen Hydroxylgruppen des Molekulargewichtsbereichs 400-6 000,
c) mindestens einer Epoxidverbindung mit einem Gehalt an Hydroxylgruppen von maximal 2,5 Gew.-% und einem Epoxid-Äquivalentgewicht von 100-300
und gegebenenfalls
d) an sich bekannten Hilfs- und Zusatzmitteln
unter Einhaltung eines Äquivalentverhältnisses von Isocyanatgruppen zu Hydroxylgruppen von 0,7 : 1 bis 1,3 : 1 und eines Äquivalentverhältnisses von Epoxidgruppen zu Isocyanatgruppen von 0,1 : 1 bis 1 : 1 als bei 10-60 °C zu Polyurethankunststoffen mit verbessertem Wärmealterungsverhalten ausreagierende Gießmassen.

2. Verwendung gemäß Anspruch 1, dadurch gekennzeichnet, daß man als Komponente a) Phosgenierungsprodukte von Anilin/Formaldehyd-Kondensate verwendet.

**Claims**

1. Use of reaction mixtures consisting of
a) organic polyisocyanates,
b) polyether polyols containing at least two alcoholic hydroxyl groups and having a molecular weight in the range 400-6 000,
c) at least one epoxide compound having a content of hydroxyl groups of at most 2.5 % by weight and an epoxide equivalent weight of 100-300
and, optionally,
d) auxiliaries and additives known per se,
while adhering to an equivalent ratio of isocyanate groups to hydroxyl groups of 0.7 : 1 to 1.3 : 1 and an equivalent ratio of epoxide groups to isocyanate groups of 0.1 : 1 to 1 : 1, as casting compositions which cure, at 10-60 °C, to form polyurethane plastics with improved heat ageing properties.

2. Use according to Claim 1, characterised in that phosgenation products of aniline/formaldehyde condensates are used as component a).

**Revendications**

1. Utilisation de mélanges réactionnels comprenant :

a) des polyisocyanates organiques,

b) des polyéther-polyols comportant au moins deux groupes hydroxyle alcoolique et ayant un poids moléculaire se situant dans l'intervalle allant de 400 à 6 000,

c) au moins un composé époxy ayant une teneur maximale en groupes hydroxyle de 2,5 % en poids et un poids équivalent époxy de 100 à 300,

ainsi qu'éventuellement

d) des additifs et des agents auxiliaires connus en soi,

tout en maintenant un rapport équivalent de 0,7 : 1 à 1,3 : 1 entre les groupes isocyanate et les groupes hydroxyle, ainsi qu'un rapport équivalent de 0,1 : 1 à 1 : 1 entre les groupes époxy et les groupes isocyanate, comme matières de moulage réagissant à 10-60 °C pour former des matières synthétiques de polyuréthanes ayant un meilleur comportement au vieillissement thermique.

2. Utilisation selon la revendication 1, caractérisée en ce que, comme composant a), on utilise des produits de phosgénation de condensats d'aniline/formaldéhyde.